# EUROPÄISCHE PATENTSCHRIFT

(11) **EP 3 155 174 B1**
(45) Veröffentlichungstag und Bekanntmachung des Hinweises auf die Patenterteilung: **21.08.2019**
(21) Anmeldenummer: 14730883.7
(22) Anmeldetag: 16.06.2014
(51) Int. Cl.: E01H 10/00

(54) **STEUERUNGSVORRICHTUNG FÜR EIN STREUFAHRZEUG**
CONTROL DEVICE FOR A SPREADING VEHICLE
DISPOSITIF DE COMMANDE D'UN VÉHICULE D'ÉPANDAGE

(43) Veröffentlichungstag der Anmeldung: 19.04.2017
(73) Patentinhaber: G. Lufft Mess- und Regeltechnik GmbH, 70736 Fellbach-Schmiden (DE)
(72) Erfinder: HIRZEL, Klaus, 70180 Stuttgart (DE)
(74) Vertreter: Grünecker Patent- und Rechtsanwälte PartG mbB
(86) Internationale Anmeldenummer: PCT/EP2014/062532
(87) Internationale Veröffentlichungsnummer: WO 2015/192868

(56) Entgegenhaltungen:
- EP-A2- 1 536 067
- DE-A1- 10 139 668
- DE-A1-102010 025 703
- US-A- 6 154 699

## Beschreibung

### Gebiet der Erfindung

Die Erfindung betrifft eine Steuerungsvorrichtung für ein Streufahrzeug für den Winterdienst und insbesondere die Steuerung eines Streuvorgangs eines Streufahrzeugs unter Berücksichtigung von Daten zur Wetterprognose.

### Stand der Technik

Winterdienst-Streufahrzeuge dienen dem Verteilen von Streugut auf Verkehrsflächen zum Auftauen und/oder Abstumpfen von Verkehrswegen. Es werden flüssige und granulierte Taustoffe sowie Gemische von flüssigen und granulierten Taustoffe, insbesondere Salze, und abstumpfende Materialien wie Sand und Split gestreut. Streusalz wird häufig vor oder während des Ausstreuvorgangs mit einer dosiert beigegebenen Flüssigkeit angefeuchtet, der sogenannten Sole, damit es auf den Verkehrsflächen besser haftet und sowohl während als auch nach dem Ausstreuen durch den natürlichen Wind oder den Fahrtwind des Streufahrzeugs oder anderer Fahrzeuge wesentlich weniger der Gefahr ausgesetzt ist, verweht zu werden. Einige Winterdienste gehen zunehmend dazu über, ausschließlich flüssige Sohle auszubringen.

Der Streuvorgang erfolgt üblicher Weise elektronisch gesteuert. So wird durch eine Steuerung ein Streuvorgang unterbrochen, wenn das Streufahrzeug beispielsweise an einer Straßenkreuzung anhält. So beschreibt die US 6 149 079 A eine Steuerung des Streuvorgangs, die das Förderorgan des Streuguts und eine Streuteller in Abhängigkeit von der Bewegung des Streufahrzeugs steuert. In der DE 31 24 368 A1 wird ein Verfahren beschrieben, in dem der Streuvorgang in Abhängigkeit von der Geschwindigkeit des Streufahrzeugs gesteuert wird. In der DE 10 2005 012 886 A1 wird ein Streufahrzeug für den Winterdienst beschrieben, in dem eine Dosiereinheit den Streuvorgang in Abhängigkeit von einer vorgegebenen Streubreite, Streudichte und Fahrgeschwindigkeit steuert. US 6 154 699 A beschreibt ein Streuverfahren, bei dem ein Fahrzeug mit einer Streuvorrichtung entlang einer Route fährt, wobei das Verfahren die folgenden Schritte umfasst: Überwachen der Position des Fahrzeugs entlang der Route; Vergleichen der überwachten Positionsdaten mit gespeicherter Routeninformation, die Daten enthält, die veränderliche ortsabhängige Streubedingungen für die Route darstellen; und Erzeugen einer Streuanweisung in Abhängigkeit vom Vergleichsergebnis, wobei die gespeicherte Routeninformation eine Temperaturekarte aufweist, die Temperaturen entlang der Route zeigt.

Trotz verschiedentlicher Fortschritte ist es jedoch bisher nicht gelungen, ein zuverlässiges zeit- und streugutoptimiertes Streuen zur Enteisung und Abstumpfung von Verkehrswegen zu garantieren. Beispielsweise kommt es immer wieder zu verspäteten Streueinsätzen oder zum unnötigen Bestreuen von Abschnitten von Verkehrswegen, die auch ohne Streumittel eine hinreichende Haftung von Fahrzeugen gewährleistet hätten.

Angesichts dieser Probleme im Stand der Technik ist es eine Aufgabe der vorliegenden Erfindung, eine Steuerung einer Streueinrichtung eines Streufahrzeugs für den Winterdienst bereitzustellen, die einen zeitlich und räumlich optimierten Streuvorgang ermöglicht.

### Beschreibung der Erfindung

Diese Aufgabe wird durch eine Vorrichtung zum Steuern des Betriebs einer Streueinrichtung eines Streufahrzeugs für den Winterdienst gemäß Anspruch 1 gelöst. Die Vorrichtung umfasst
eine Datenübermittlungseinrichtung (zum Senden und Empfangen von Daten), die in dem Streufahrzeug vorgesehen ist und die zum Aufbau einer drahtlosen Datenverbindung ausgebildet ist, und die dazu ausgebildet ist, Prognosedaten zu Wetter- und/oder Verkehrswegeverhältnissen (insbesondere Straßenverhältnissen) von einem Server, insbesondere über das Internet, zu empfangen;
eine Einrichtung zum Bestimmen von Verkehrswegeverhältnissen, die in oder an dem Streufahrzeug angebracht ist und dazu ausgebildet ist, Oberflächenparameter von einem Verkehrsweg (der insbesondere von dem Streufahrzeug befahren wird oder zu befahren ist) zu bestimmen; und
eine Steuerungseinheit, die dazu ausgebildet ist, die Prognosedaten von der Datenübermittlungseinrichtung zu empfangen und zu verarbeiten und den Betrieb der Streueinrichtung auf der Grundlage der verarbeiteten Prognosedaten und der bestimmten Oberflächenparameter zu steuern.

Unter Verkehrswegen werden hier alle mögliche von Fahrzeugen befahrbaren Wege, etwa Straßen, Flugfelder, Start- und Landebahnen, Taxiways etc., verstanden. Als Streufahrzeug kann ein bekanntes bemanntes Straßenstreufahrzeug, beispielsweise ein Lastkraftwagen, Verwendung finden, in dem die erfindungsgemäße Vorrichtung installiert ist. Die Streueinrichtung des Streufahrzeugs kann zur Ausgabe von Streugut in Form von flüssigen und granulierte Taustoffe sowie Gemischen von flüssigen und granulierten Taustoffe, insbesondere von Salzen, und abstumpfende Materialien wie Sand und Split ausgebildet sein. Die Prognosedaten zu den Verkehrswegeverhältnissen können Daten über dieselben oder einige der Oberflächenparameter umfassen, die von der Einrichtung zum Bestimmen von Verkehrswegeverhältnissen des Streufahrzeugs bestimmt werden. Zu diesen Oberflächenparameters gehören Parameter für die Oberflächentemperatur, Feuchtigkeit, Eisdicke, Schneedicke, Wasserfilmdicke, das Eis-zu-Wasser-Verhältnis, die Gefriertemperatur eines Eis-Wasser-Gemisches, des Salzgehaltes eines Eis-Wasser-Gemisches und den Reibungskoeffizienten des Verkehrswegs. Wetterprognosedaten können Daten über die vorhergesagte Lufttemperatur und Niederschlagsart und -menge enthalten.

Die Datenübermittlungseinrichtung kann dazu ausgebildet sein, Daten über ein Mobilfunknetz oder WLAN auszutauschen. Die Einrichtung zum Bestimmen von Verkehrswegeverhältnissen kann mit der Datenübermittlungseinrichtung und/oder der Steuereinheit beispielsweise über eine CAN-Schnittstelle oder andere KFZ-typische Schnittstelle (RS 484 oder RS 485) verbunden sein. Außerdem kann diese Einrichtung über eine solche Schnittstelle mit einer Einrichtung zum Bestimmen der Position des Streufahrzeugs, beispielsweise auf GPS-Basis, verbunden sein. Die Steuerungseinheit kann einen handelsüblichen Computer, eine CPU-Einheit sowie einen permanenten und flüchtigen Speicher umfassen.

Insbesondere erfolgt gemäß der vorliegenden Erfindung die Steuerung der Streueinrichtung eines Streufahrzeugs für den Winterdienst nicht auf der Grundlage globaler Wetterprognosen, sondern einer Kombination von von einem entfernten Server bereitgestellten Vorhersagen über Wetter- und/oder Verkehrswegeverhältnisse und lokal an aktuellen Positionen bestimmten Oberflächenparametern durch eine in dem Streufahrzeug installierte Einrichtung. Hierdurch wird eine im Stand der Technik nicht bekannte örtlich und zeitlich den Wetter- bzw. (Verkehrswegen-)Straßenverhältnissen akkurat angepasste Streuung von Verkehrswegen ermöglicht.

Die von der Datenübermittlungseinrichtung von dem Server empfangenen (und von diesem zuvor gesammelten und/oder bestimmten) Prognosedaten können auf der Grundlage von auf örtlich regelmäßig verteilte Rasterorte bezogene Wettermodelle und/oder Daten von Wetterstationen und/oder Glättemeldeanlagen gewonnen werden. Der Server kann auf relativ engmaschig verteilte Referenzpositionen entlang einer vorbestimmten Fahrtroute des Streufahrzeugs bezogene Daten über Verkehrswegeverhältnisse bzw. Wetterverhältnisse bestimmen und der Steuereinheit des Streufahrzeugs zur Steuerung des Streubetriebs über die Datenübermittlungseinrichtung bereitstellen.

Gemäß einer Weiterbildung ist die Datenübermittlungseinrichtung dazu ausgebildet, Daten über die von der im Streufahrzeug installierten Einrichtung zum Bestimmen von Verkehrswegeverhältnissen bestimmten Oberflächenparameter an den Server zu senden, wobei die von der Datenübermittlungseinrichtung von dem Server empfangenen Prognosedaten auf der Grundlage der von der Datenübermittlungseinrichtung an den Server gesendeten Daten über die bestimmten Oberflächenparameter gewonnen werden. In den Prognosedaten, die der Server bereitstellt, gehen hier also die lokal bestimmten Oberflächenparameter ein. Beispielsweise kann der Server auf der Grundlage anderweitig erhaltener Prognosedaten und der Daten über die lokalen Oberflächenparameter Prognosedaten über zukünftige Straßenverhältnisse an die Datenübermittlungseinrichtung im Streufahrzeug senden, sodass auf der Grundlage dieser Prognosedaten der Streubetrieb der Streueinrichtung des Streufahrzeugs erfolgen kann.

Gemäß einer weiteren Weiterbildung ist die Steuerungseinheit dazu ausgebildet, auf der Grundlage der von der Datenübermittlungseinrichtung von dem Server empfangenen Prognosedaten auf den jeweiligen Standpunkt des Streufahrzeugs bezogene lokale Prognosedaten zu lokalen Wetter- und/oder Verkehrswegeverhältnissen zu berechnen und auf der Grundlage der berechneten lokalen Prognosedaten die Streueinrichtung zu steuern. Die Steuereinheit kann in dieser Weiterbildung also die von dem Server bereitgestellten Daten weiterverarbeiten. Diese Weiterverarbeitung kann insbesondere auf der Grundlage der von der Einrichtung zum Bestimmen von Verkehrswegeverhältnissen, die in oder an dem Streufahrzeug angebracht ist, bestimmten Oberflächenparameter erfolgen. Somit kann die Steuerungseinheit flexibel für bestimmte Anwendungsgebiete programmiert werden. So können beispielsweise auf der Grundlage derselben vom Server bereitgestellten Daten Steuerungseinheiten verschiedener Streufahrzeuge verschiedene Steuerungen der Streubetriebe nach Maßgabe der Einsatzregion bereitstellen.

In sämtlichen obigen Beispielen für die erfindungsgemäße Vorrichtung kann eine weitere Einrichtung zur Bestimmung der Lufttemperatur und/oder Oberflächentemperatur eines Verkehrswegs und/oder des Taupunkts auf dem Verkehrsweg vorgesehen sein. Diese weitere Einrichtung kann in oder an dem Streufahrzeug und als Teil der Einrichtung zum Bestimmen von Verkehrswegeverhältnissen angebracht sein, und die Steuereinheit kann die Streueinrichtung auf der Grundlage der bestimmten Lufttemperatur und/oder Oberflächentemperatur eines Verkehrswegs und/oder des Taupunkts auf dem Verkehrsweg steuern, sodass eine weitere Anpassung des Streuvorgangs an lokale Bedingungen ermöglicht werden kann.

In sämtlichen oben beschriebenen Beispielen für die erfindungsgemäße Vorrichtung kann die Einrichtung zum Bestimmen von Verkehrswegeverhältnissen umfassen:
eine Lichtsende-Einrichtung, die zum Aussenden von Licht vorbestimmter Wellenlängen auf einen Verkehrsweg ausgebildet ist; und
eine Detektionseinrichtung, die dazu ausgebildet ist, das von der Lichtsende-Einrichtung ausgesendete und von dem Verkehrsweg reflektierte Licht zu detektieren; und
eine Verarbeitungseinrichtung, die dazu ausgebildet ist, auf der Grundlage des von der Detektionseinrichtung detektierten Lichts die Oberflächenparameter des Verkehrswegs, insbesondere zumindest 100 mal pro Sekunde oder zumindest 400 oder 500 mal pro Sekunde, zu bestimmen.

Die Lichtsende-Einrichtung kann eine Infrarot-Sendeeinrichtung, die zum Aussenden von Licht vorbestimmter Wellenlängen auf eine Straßenoberfläche ausgebildet ist umfassen, und sie kann in Form_einer LED-Einrichtung ausgebildet sein. Die Verarbeitungseinrichtung kann in Form eines Computers vorgesehen sein oder einen solchen umfassen. Weiterhin kann die Infrarot-Sendeeinrichtung ausgebildet sein, Licht vorbestimmter Wellenlänge in einem Wellenlängenbereich von 780 nm bis 2500 nm, beispielsweise 780 nm bis 1000 nm oder 1500 nm auszusenden.

Durch eine hohe Rate der Bestimmung der Oberflächenparameter von einigen hundert Bestimmungen pro Sekunde können aktuelle Werte dieser Parameter sowie Änderung der Parameter möglichst zeitnah, also praktisch ohne nennenswerte Zeitverzögerung, erfasst und ausgewertet werden. Bei 400 Bestimmungen pro Sekunde werden bei einer Fahrgeschwindigkeit des Fahrzeugs von beispielsweise etwa 80 km/h alle 5 cm eine Messung und Bestimmung durchgeführt. Prinzipiell sollte die Bestimmung der Oberflächenparameter so schnell erfolgen, dass das System sehr schnell und präzise auf Änderungen der Fahrbahneigenschaften reagieren kann.

Die Einrichtung zum Bestimmen von Verkehrswegeverhältnissen kann weiterhin eine Pulseinrichtung umfassen, die dazu ausgebildet ist, das von der Infrarot-Sendeeinrichtung ausgesendete Licht in Pulsen von höchsten 500 µs Dauer, insbesondere höchsten 100 µs Dauer, und/oder Pausen von höchsten 500 µs Dauer, insbesondere höchsten 100 µs Dauer, zu pulsen. Durch die Pulse der Pulseinrichtung kann effektiv und mit geringen Totzeiten das für die Messung benötigte Licht ausgesendet werden. Ferner wird durch die Pulsung eine Zeitkonstante, eine Clock, für die Messung und die nachfolgende Bestimmung gegeben.

In der Einrichtung zum Bestimmen von Verkehrswegeverhältnissen kann die Infrarot-Sendeeinrichtung dazu ausgebildet sein, Licht mit zumindest zwei vorbestimmten unterschiedlichen Wellenlängen bzw. aus zumindest zwei unterschiedlichen Wellenlängenbereichen (zur Detektion von Feucht/Nass vs. Trocken) auszusenden. Die von der Infrarot-Sendeeinrichtung ausgesendeten unterschiedlichen Wellenlängen können jeweils im Infrarotbereich liegen, wobei ferner die Infrarot-Sendeeinrichtung Licht innerhalb eines Referenzwellenlängenbereichs zur Kalibrierung aussenden kann, wobei der Referenzwellenlängenbereich ebenfalls im Infrarotbereich liegt.

Eine der ausgesendeten Wellenlängen kann insbesondere für die Bestimmung von Eis oder Eisschichten auf der Fahrbahn geeignet sein, beispielsweise eine Wellenlänge von 1500 nm. Eine weitere, von der ersten Wellenlänge verschiedene, ausgesendete Wellenlänge kann für die Bestimmung dünner Wasserfilme geeignet sein. Dabei kann ein Wasserfilm von bis zu etwa 1 mm Dicke auf der Fahrbahn mit einer Wellenlänge von 1450 nm bestimmt werden. Für dickere Wasserfilme oder Wasserschichten auf der Fahrbahn, etwa bis 30 mm Dicke der Wasserschicht, kann eine weitere Wellenlänge von etwa 980 nm verwendet werden. Zusätzlich kann dauerhaft oder periodisch oder zumindest zu Beginn der Fahrt eine weitere Wellenlänge von 1300 nm als eine Referenzwellenlänge zum Zwecke der Kalibrierung ausgesendet werden. Die genannten drei Wellenlängen sowie die Referenzwellenlänge sind jeweils typischerweise voneinander verschieden. Es versteht sich, dass auch andere Wellenlängen verwendet werden können. Allgemein können die Wellenlängen den Absorptionsbanden von Wasser und Eis angepasst sein.

Es wird weiterhin ein System zum Bestreuen von Verkehrswegen bereitgestellt, das ein Streufahrzeug für den Winterdienst, eine Vorrichtung gemäß einem der vorhergehenden Beispiele und einen Server in drahtloser Datenverbindung mit der Datenübermittlungseinrichtung der Vorrichtung, wobei der Server dazu ausgebildet ist, Prognosedaten zu Wetter- und/oder Verkehrswegeverhältnissen bereitzustellen, umfasst. Der Server kann dazu ausgebildet sein, die Prognosedaten zu Wetter- und/oder Verkehrswegeverhältnissen wie oben beschrieben bereitzustellen.

Die oben genannte Aufgabe wird auch gelöst durch ein Steuerungsverfahren für den Betrieb einer Streueinrichtung eines Streufahrzeugs für den Winterdienst gemäß Anspruch 10. Das Verfahren umfasst die Schritte:
Empfangen von Prognosedaten zu Wetter- und/oder Verkehrswegeverhältnissen, die von einem Server bereitgestellt werden, insbesondere über das Internet und insbesondere durch eine Datenübermittlungseinrichtung, die in dem Streufahrzeug vorgesehen ist;
Bestimmen von Oberflächenparametern von einem Verkehrsweg durch eine Einrichtung zum Bestimmen von Verkehrswegeverhältnissen, die in oder an dem Streufahrzeug angebracht ist; und
Steuern der Streueinrichtung auf der Grundlage der Prognosedaten und bestimmten Oberflächenparameter. Eine Vorrichtung zum Steuern des Betriebs einer Streueinrichtung eines Streufahrzeugs für den Winterdienst gemäß jedem oben beschriebenen Beispiel kann für das Steuerungsverfahren Verendung finden. Insbesondere können Daten über die bestimmten Oberflächenparameter von der Datenübermittlungseinrichtung an den Server gesendet werden und nach Empfangen der Daten über die bestimmten Oberflächenparameter kann der Server die Prognosedaten auf der Grundlage dieser Daten über die lokal bestimmten Oberflächenparameter berechnen. Andererseits kann auch vorgesehen sein, dass die Steuereinheit im Streufahrzeug auf der Grundlage der vom Server erhaltenen Daten und lokal bestimmter Oberflächenparameter lokale Prognosedaten erstellt und auf der Grundlage dieser lokalen Prognosedaten den Streubetrieb steuert.

Das Bestimmen der Oberflächenparameter des Verkehrswegs kann die folgenden Schritte umfassen: Aussenden von Licht vorbestimmter Wellenlängen, insbesondere im Infrarot-Bereich, auf einen Verkehrsweg, Detektieren des ausgesendeten und von dem Verkehrsweg reflektierten Lichts und Bestimmen der Oberflächenparameter auf der Grundlage des detektierten Lichts, insbesondere zumindest 100 mal pro Sekunde oder zumindest 400 mal pro Sekunde.

Weiterhin wird ein Computerprogrammprodukt mit einem oder mehreren computerlesbaren Medien, die computerlesbare Anweisungen aufweisen, die, wenn sie von einem Computer gelesen werden, diesen dazu veranlassen, die Schritte eines der oben beschriebenen Beispiele des erfindungsgemäßen Verfahrens auszuführen, bereitgestellt.

Weitere Merkmale und beispielhafte Ausführungsformen der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Figuren

Figur 1 zeigt beispielhaft eine Systemkonfiguration mit einem Server und einem Streufahrzeug mit einer Datenübermittlungseinrichtung, einer Einrichtung zum Bestimmen von Verkehrswegeverhältnissen und einer Steuerungseinheit zum Steuern des Betriebs einer Streueinrichtung des Streufahrzeugs.
Figur 2 veranschaulicht ein Beispiel für eine Einrichtung zum Bestimmen von Verkehrswegeverhältnissen, die in oder an einem Streufahrzeug angebracht ist.

### Detaillierte Beschreibung

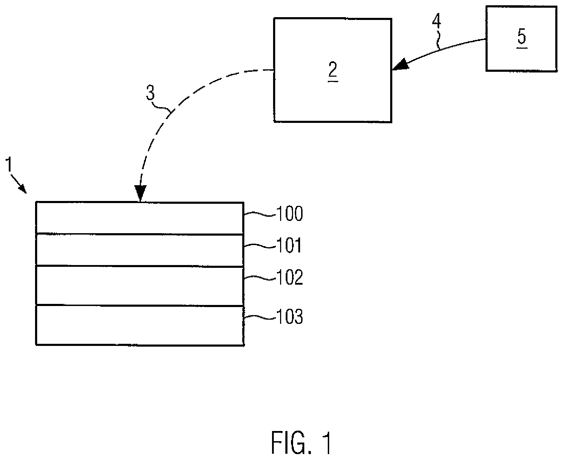

Wie in Figur 1 gezeigt kann ein Streufahrzeug 1 mit einem erfindungsgemäßen Beispiel einer Vorrichtung zum Steuern eines Streubetriebs ausgestattet sein, wobei diese Vorrichtung eine Datenübermittlungseinrichtung 100, eine Einrichtung 101 zum Bestimmen von Verkehrswegeverhältnissen und eine Steuerungseinheit 102 zum Steuern des Betriebs einer Streueinrichtung 103 umfasst. Mithilfe der Datenübermittlungseinrichtung 100 können Daten zwischen der Vorrichtung und einem Server, beispielsweise, einem Internet(Cloud)server 2 über eine drahtlose Datenverbindung (Internetverbindung) 3 ausgetauscht werden. Der Internetserver 2 kann wiederum über eine Datenverbindung 4 aus einer Datenbank 5 Prognosedaten zu Wetter- und/oder Verkehrswegeverhältnisse abrufen oder solche Daten aus der Datenbank 5 abrufen, aus denen er Prognosedaten zu Wetter- und/oder Verkehrswegeverhältnisse gewinnen kann. Insbesondere handelt es sich um Daten zu kurzfristigen Prognosen zu Wetter- und/oder Verkehrswegeverhältnissen für einen Zeitraum von typischerweise weniger als 12 Stunden, insbesondere weniger als 10 oder 8 Stunden. Die Datenbank 5 kann hierzu auf Rasterorte bezogene globale Wettermodelldaten beispielsweise aus dem Global Forecast System des NTCEP im 0,5° Geo-Raster bereitstellen. Sie kann alternativ oder zusätzlich Daten von Wetterstationen und/oder Glättemeldeanlagen oder Daten von auf Referenzpositionen entlang einer vorbestimmten Fahrtroute des Streufahrzeugs 1 bezogenen Straßenzustands- und/oder Wetterprognosen bereitstellen.

Der Internetserver 2 liefert Daten zu (kurzfristigen) Prognosen zu Wetter- und/oder Verkehrswegeverhältnissen an die Datenübermittlungseinrichtung 100 des Streufahrzeugs 1, die ein Mobiltelefon oder einen Tablet-PC oder eine andere mobile Computereinrichtung umfassen kann. Auf der Grundlage dieser Daten und lokal mithilfe der Einrichtung 101 zum Bestimmen von Verkehrswegeverhältnissen bestimmter Oberflächenparameter eines vom Streufahrzeug befahrenen oder zu befahrenden Wegabschnitts eines Verkehrswegs wird der Betrieb der Streueinrichtung 103 gesteuert. Type bestimmte Oberflächenparameter umfassen einen oder mehrere Parameter für die Oberflächentemperatur, Feuchtigkeit, Eisdicke, Schneedicke, Wasserfilmdicke, das Eis-zu-Wasser-Verhältnis, die Gefriertemperatur eines Eis-Wasser-Gemisches, des Salzgehaltes eines Eis-Wasser-Gemisches und den Reibungskoeffizienten. Somit kann die Steuereinheit 102 für einen aktuell befahrenen bzw. einen in nächster Zukunft zu befahrenen Streckenabschnitt über ein entsprechendes Steuermodell auf Grundlage der von Internetserver 2 erhaltenen Prognosedaten und der bestimmten Oberflächenparameter die optimale Streudichte für das von der Streueinrichtung 103 auszubringende Streugut (beispielsweise Sand, Kies oder Tausalz) ermitteln. Die ermittelte und ausgebrachte optimale Streudichte garantiert, dass die behandelte Strecke zumindest bis zu dem Zeithorizont der Prognosedaten von Glatteis frei bleibt.

Der Streubetrieb der Streueinrichtung 103 lässt sich durch die Kombination der Verarbeitung von vom Internetserver 2 bereitgestellten Prognosedaten und den lokal bestimmten Oberflächenparametern örtlich hoch genau steuern. Zum Beispiel kann so eine automatische präventive Streuung auf einer zur Zeit des Passierens der Streufahrzeugs 1 trockenen kalten Brücke, auf der, innerhalb der nächsten 2 Stunden beispielsweise, Schneefall oder überfrierende Nässe zu erwarten ist, erfolgen, während Straßenabschnitte entlang der Fahrtroute des Streufahrzeugs 1 unmittelbar vor und nach der Brücke nicht gestreut werden.

Gemäß einer Ausführungsform ist es vorgesehen, dass der Internetserver 2 Daten über die von der Einrichtung 101 zum Bestimmen von Verkehrswegeverhältnissen bestimmten Oberflächenparameter erhält und diese Daten bei der Ermittlung von Prognosedaten zu Verkehrswegeverhältnissen, die schließlich der Steuereinheit 102 über die Datenübermittlungseinrichtung 100 und die Datenverbindung 3 bereitgestellt werden, berücksichtigt. Gemäß einer Ausführungsform ist es vorgesehen, dass die Steuereinheit 102 die von der Internetserver 2 erhaltenen Prognosedaten unter Berücksichtigung der von der Einrichtung 101 zum Bestimmen von Verkehrswegeverhältnissen bestimmten Oberflächenparameter zur Ermittlung lokaler Prognosedaten zu Verkehrswegeverhältnissen, die dann zur Steuerung der Streueinrichtung 103 genutzt werden, verwendet.

In den oben genannten Beispiele können die Oberflächenparameter noch durch Daten zu Lufttemperatur und/oder Oberflächentemperatur eines Verkehrswegs und/oder des Taupunkts auf dem Verkehrsweg des Streufahrzeugs 1, die durch eine entsprechende in oder an dem Streufahrzeug 1 angebrachte Einrichtung bereitgestellt werden, ergänzt werden. Auch auf der Grundlage dieser Daten können also der Internetserver 2 und/oder die Steuereinheit 102 des Streufahrzeugs 1 Prognosedaten zu Wetter- und/oder Verkehrswegeverhältnissen zur Steuerung der Streueinrichtung 103 gewinnen.

In den oben genannten Beispielen kann der Datentransfer vom Internetserver 2 zur Datenübermittlungseinrichtung 100 des Streufahrzeugs 1 und/oder umgekehrt automatisch kontinuierlich oder in vorbestimmten Zeitintervallen erfolgen.

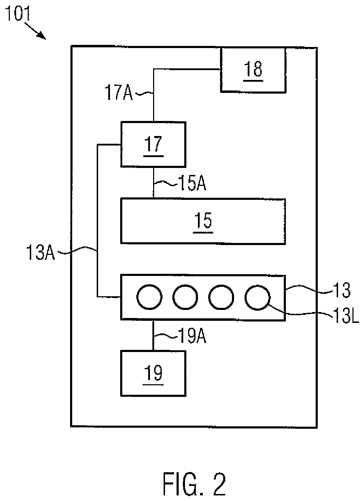

In Figur 2 wird eine Einrichtung 101 zum Bestimmen von Verkehrswegeverhältnissen veranschaulicht. Figur 3 zeigt schematisch eine Frontansicht der Einrichtung 101 zum Bestimmen von Verkehrswegeverhältnissen aus Figur 1. In der in Figur 2 gezeigten Ausführungsform umfasst die Einrichtung 101 eine LED-Einheit 13. Rein beispielhaft ist die LED-Einheit 13 in der Figur 3 mit vier LED 13L gezeigt. Es kann aber auch eine andere Zahl von LED in der LED-Einheit 13 vorhanden sein. Die Zahl von vier LED 13L hat jedoch den Vorteil, dass jede LED 13L eine unterschiedliche Aufgabe übernehmen kann. Typischerweise können die LEDs 13L Licht im Infrarotbereich aussenden. Es sind prinzipiell auch andere Wellenlängen möglich. Licht im Infrarotbereich ist zum einen unsichtbar für andere Verkehrsteilnehmer, zum anderen ist es besonders geeignet für die Detektion von Wasserschichten und Eisschichten, insbesondere auf Fahrbahnoberflächen. Eine der von den LEDs 13L der LED-Einheit 13 ausgesendeten Wellenlängen kann für die Bestimmung von Eis oder Eisschichten auf der Fahrbahn geeignet sein, beispielsweise eine Wellenlänge von 1500 nm. Eine zweite LED 13L kann eine von der ersten Wellenlänge verschiedene Wellenlänge aussenden, die besonders für die Bestimmung von dünnen Wasserfilmen geeignet sein kann. Dabei kann ein Wasserfilm von beispielsweise bis zu 1 mm Dicke auf der Fahrbahn mit einer Wellenlänge von 1450 nm bestimmt werden. Für dickere Wasserfilme oder Wasserschichten auf der Fahrbahn, etwa bis 30 mm Dicke der Wasserschicht, kann eine weitere Wellenlänge mit einer weiteren LED verwendet werden. Insbesondere kann diese weitere Wellenlänge etwa 980 nm betragen. Zusätzlich kann dauerhaft oder periodisch oder zumindest zu Beginn der Fahrt eine weitere Wellenlänge von 1300 nm mittels einer vierten LED 13L ausgesendet werden. Diese weitere Wellenlänge kann als Referenzwellenlänge zur Kalibrierung dienen. Es versteht sich, dass auch andere Wellenlängen verwendet werden können. Ebenso können auch mehr als vier LEDs verwendet werden.

Die LED-Einheit 13 kann über eine Pulseinheit 19 gesteuert werden. Die Pulseinheit 19 kann über eine Leitung 19A mit der LED-Einheit verbunden sein kann. Das von der LED-Einheit ausgesendete Licht kann durch die Pulseinheit in Pulse von höchsten 500 µs Dauer, insbesondere höchsten 100 µs Dauer, und/oder Pausen von höchsten 500 µs Dauer, insbesondere höchsten 100 µs Dauer, gepulst werden.

Die LED-Einheit 13 sendet mit Hilfe der LEDs 13L Licht auf die Fahrbahnoberfläche und wird dort reflektiert. Figur 2 zeigt ferner eine Detektionseinrichtung 17, beispielsweise eine Sensoreinheit, zum Detektieren des von der LED-Einrichtung 13 ausgesendeten und dann von der Straßenoberfläche reflektierten Lichts. Detektionseinheit 17 kann typischerweise über eine Leitung 13 Information über das von den LEDs 13L ausgesendete Licht und gegebenenfalls dessen Pulsung erhalten. Die Detektionseinheit 17 kann die erhaltene analoge Lichtinformation des reflektierten Lichts weiter verarbeiten. Beispielsweise kann die Detektionseinheit 17 an dem Streufahrzeug 1 der Figur 1 zumindest 1,0 Meter oberhalb der Straßenoberfläche das von der LED-Einheit 13 ausgesendete und von der Straßenoberfläche reflektierte Licht detektieren. Die Einrichtung 101 zum Bestimmen von Verkehrswegeverhältnissen kann dazu ausgebildet sein, die Oberflächenparameter auf der Grundlage des detektierten Lichts, insbesondere zumindest 100 mal pro Sekunde oder zumindest 400 mal pro Sekunde.

Die Detektionseinheit 17 kann mit einer Leitung 17A mit einer Schnittstelle 18 verbunden sein. Die Schnittstelle 18 kann eine CAN-Schnittstelle oder andere KFZ-typische Schnittstelle umfassen, so dass die von der Detektionseinheit 17 bereitgestellten Signale weiter verarbeitet werden können.

In den obigen Ausführungsformen wird als Infrarot-Sendeeinrichtung eine LED-Einrichtung/Einheit verwendet. Dieses ist beispielhaft zu verstehen und es können alternativ andere geeignete Infrarot-Sendeeinrichtungen Verwendung finden.

Es wird also eine Vorrichtung zum Steuern des Betriebs einer Streueinrichtung eines Streufahrzeugs für den Winterdienst bereitgestellt, die eine zuverlässige Streuung zur Verhinderung von Glatteisbildung auf Verkehrswegen durch Berücksichtigung von Prognosedaten, die von einem entfernten Server bereitgestellt werden, und lokal bestimmten Oberflächenparametern ermöglicht.

## Patentansprüche

1. Vorrichtung zum Steuern des Betriebs einer Streueinrichtung (103) eines Streufahrzeugs (1) für den Winterdienst, mit
einer Datenübermittlungseinrichtung (100), die in dem Streufahrzeug (1) vorgesehen ist und die zum Aufbau einer drahtlosen Datenverbindung ausgebildet ist, und die dazu ausgebildet ist, Prognosedaten zu Wetter- und/oder Verkehrswegeverhältnissen von einem Server, über das Internet, zu empfangen;
einer Einrichtung (101) zum Bestimmen von Verkehrswegeverhältnissen, die in oder an dem Streufahrzeug (1) angebracht ist und dazu ausgebildet ist, Oberflächenparameter von einem Verkehrsweg zu bestimmen; und
einer Steuerungseinheit (102), die in dem Streufahrzeug (1) installiert ist, die dazu ausgebildet ist, die Prognosedaten von der Datenübermittlungseinrichtung (100) zu empfangen und zu verarbeiten und den Betrieb der Streueinrichtung (103) auf der Grundlage der verarbeiteten Prognosedaten und der bestimmten Oberflächenparameter zu steuern;
wobei die Steuerungseinheit (102) dazu ausgebildet ist, auf der Grundlage der von der Datenübermittlungseinrichtung (100) von dem Server empfangenen Prognosedaten auf den jeweiligen Standpunkt des Streufahrzeugs (1) bezogene lokale Prognosedaten zu lokalen Wetter- und/oder Verkehrswegeverhältnissen zu berechnen und auf der Grundlage der berechneten lokalen Prognosedaten die Streueinrichtung (103) zu steuern.

2. Vorrichtung gemäß Anspruch 1, wobei die Datenübermittlungseinrichtung (100) dazu ausgebildet ist, Daten über die bestimmten Oberflächenparameter an den Server zu senden, und wobei die von der Datenübermittlungseinrichtung (100) von dem Server empfangenen Prognosedaten auf der Grundlage der von der Datenübermittlungseinrichtung (100) an den Server gesendeten Daten über die bestimmten Oberflächenparameter gewonnen werden.

3. Vorrichtung gemäß einem der vorhergehenden Ansprüche, wobei die von der Datenübermittlungseinrichtung (100) von dem Server empfangenen Prognosedaten auf der Grundlage von auf örtlich regelmäßig verteilte Rasterorte bezogene Wettermodelle und/oder Daten von Wetterstationen und/oder Glättemeldeanlagen gewonnen werden.

4. Vorrichtung gemäß Anspruch 3, wobei die Prognosedaten für Referenzpositionen entlang einer vorgegebenen Fahrroute des Streufahrzeugs (1) berechnet werden.

5. Vorrichtung gemäß einem der vorhergehenden Ansprüche, wobei die Oberflächenparameter einen oder mehrere Parameter für die Oberflächentemperatur, Feuchtigkeit, Eisdicke, Schneedicke, Wasserfilmdicke, das Eis-zu-Wasser-Verhältnis, die Gefriertemperatur eines Eis-Wasser-Gemisches, des Salzgehaltes eines Eis-Wasser-Gemisches und den Reibungskoeffizienten umfassen.

6. Vorrichtung gemäß einem der vorhergehenden Ansprüche, weiterhin mit einer Einrichtung zur Bestimmung der Lufttemperatur und/oder Oberflächentemperatur eines Verkehrswegs und/oder des Taupunkts auf dem Verkehrsweg, wobei die Einrichtung in oder an dem Streufahrzeug (1) angebracht ist, und wobei die Steuereinheit die Streueinrichtung (103) auf der Grundlage der bestimmten Lufttemperatur und/oder Oberflächentemperatur eines Verkehrswegs und/oder des Taupunkts auf dem Verkehrsweg steuert.

7. Vorrichtung gemäß einem der vorhergehenden Ansprüche, in der die Einrichtung (101) zum Bestimmen von Verkehrswegeverhältnissen umfasst:
eine Lichtsende-Einrichtung (13), die zum Aussenden von Licht vorbestimmter Wellenlängen auf einen Verkehrsweg ausgebildet ist;
eine Detektionseinrichtung (17), die dazu ausgebildet ist, das von der Lichtsende-Einrichtung (13) ausgesendete und von dem Verkehrsweg reflektierte Licht zu detektieren; und
eine Verarbeitungseinrichtung, die dazu ausgebildet ist, auf der Grundlage des von der Detektionseinrichtung (17) detektierten Lichts die Oberflächenparameter des Verkehrswegs, insbesondere zumindest 100 mal pro Sekunde oder zumindest 400 mal pro Sekunde, zu bestimmen.

8. System zum Bestreuen von Verkehrswegen, mit
einem Streufahrzeug (1) für den Winterdienst;
einer Vorrichtung gemäß einem der vorhergehenden Ansprüche; und
einem Server in drahtloser Datenverbindung mit der Datenübermittlungseinrichtung (100) der Vorrichtung, wobei der Server dazu ausgebildet ist, Prognosedaten zu Wetter- und/oder Verkehrswegeverhältnissen bereitzustellen.

9. Steuerungsverfahren für den Betrieb einer Streueinrichtung (103) eines Streufahrzeugs (1) für den Winterdienst, mit den Schritten:
Empfangen von Prognosedaten zu Wetter- und/oder Verkehrswegeverhältnissen, die von einem Server bereitgestellt werden, über das Internet und durch eine Datenübermittlungseinrichtung (100), die in dem Streufahrzeug (1) vorgesehen ist;
Bestimmen von Oberflächenparametern von einem Verkehrsweg durch eine Einrichtung (101) zum Bestimmen von Verkehrswegeverhältnissen, die in oder an dem Streufahrzeug (1) angebracht ist; und
Steuern der Streueinrichtung (103) auf der Grundlage der Prognosedaten und bestimmten Oberflächenparameter;
wobei das Steuern der Streueinrichtung (103) umfasst:
Berechnen lokaler Prognosedaten zu Wetter- und/oder Verkehrswegeverhältnissen durch eine im Streufahrzeug (1) installierte Steuereinheit auf der Grundlage der von dem Server bereitgestellten Prognosedaten zu Wetter- und/oder Verkehrswegeverhältnissen und der bestimmten Oberflächenparametern von dem Verkehrsweg.

10. Verfahren gemäß Anspruch 9, weiterhin mit Senden von Daten über die bestimmten Oberflächenparameter von der Datenübermittlungseinrichtung (100) an den Server und Empfangen der Daten über die bestimmten Oberflächenparameter und Ermitteln der Prognosedaten auf der Grundlage dieser Daten durch den Server.

11. Verfahren gemäß einem der Ansprüche 9 bis 10, in dem das Bestimmen der Oberflächenparameter des Verkehrswegs die Schritte umfasst:
Aussenden von Licht vorbestimmter Wellenlängen, im Infrarot-Bereich, auf einen Verkehrsweg;
Detektieren des ausgesendeten und von dem Verkehrsweg reflektierten Lichts; und
Bestimmen der Oberflächenparameter auf der Grundlage des detektierten Lichts, insbesondere zumindest 100 mal pro Sekunde oder zumindest 400 oder 500 mal pro Sekunde.

12. Computerprogrammprodukt mit einem oder mehreren computerlesbaren Medien, die computerlesbare Anweisungen aufweisen, die, wenn sie von einem Computer gelesen werden, diesen dazu veranlassen, die Schritte des Verfahrens gemäß einem der Ansprüche 9 bis 11 auszuführen.

## Claims

1. Device for controlling the operation of a spreading device (103) of a spreading vehicle (1) for winter road maintenance with
a data transmission device (100) that is provided in the spreading vehicle (1) and that is configured to establish a wireless data connection and that is configured to receive forecast data regarding weather and/or traffic route conditions from a server, in particular over the Internet;
a device (101) for determining the traffic route conditions that is installed in or on the spreading vehicle (1) and configured to determine surface parameters of a traffic route; and
a control unit (102) that is configured to receive and to process the forecast data from the data transmission device (100) and to control the operation of the spreading device (103) on the basis of the processed forecast data and the determined surface parameters;
wherein the control unit (102) is configured to calculate local forecast data regarding local weather and/or the traffic route conditions, which refer to the respective location of the spreading vehicle (1), on the basis of the of the forecast data received by the server from the data transmission device (100) and to control the spreading device (103) based on the calculated local forecast data.

2. Device according to Claim 1, wherein the data transmission device (100) is configured to send data regarding the specific surface parameters to the server, and wherein the forecast data received by the server from the data transmission device (100) is obtained on the basis of the data regarding the specific surface parameters sent to the server by the data transmission device (100).

3. Device according to one of the preceding claims, wherein the forecast data received by the server from the data transmission device (100) is obtained on the basis of weather models and/or data from meteorological stations and/or road ice warning systems related to raster locations that are evenly locally distributed.

4. Device according to Claim 3, wherein the forecast data is calculated for reference positions along a predetermined travel route of the spreading vehicle (1).

5. Device according to one of the preceding claims, wherein the surface parameters comprise one or several parameters for the surface temperature, moisture, ice thickness, snow thickness, water film thickness, the ice-to-water ratio, the freezing temperature of an ice-water mixture, the salt content of an ice-water-mixture and the friction coefficient.

6. Device according to one of the preceding claims, further with a unit for determining the air temperature and/or surface temperature of the traffic route and/or the melting point on the traffic route, whereby the unit is installed in or on the spreading vehicle (1) and wherein the control unit (102) controls the spreading device (103) on the basis of the determined air temperature and/or surface temperature of the traffic route and/or of the melting point on the traffic route.

7. Device according to one of the preceding claims, in which the device (101) for determining the traffic route conditions contains:
a light transmissions device (13) that is configured for emitting light of predefined wavelengths onto the traffic route;
a detection device (17) that is configured to detect the light emitted by the light transmissions device (13) and reflected by the traffic route; and
a processing device that is configured to determine the surface parameters of the traffic route on the basis of the light detected by the detection device (17), in particular at least 100 times per second or at least 400 times per second.

8. System for spreading de-icing material on traffic routes, with
a device for controlling operation of a spreading device (103) of a spreading vehicle (1) for winter road maintenance with a data transmission device (100) that is provided in the spreading vehicle (1) and that is configured to establish a wireless data connection and that is configured to receive forecast data regarding weather and/or traffic route conditions from a server, in particular over the Internet; a device (101) for determining the traffic route conditions that is installed in or on the spreading vehicle (1) and configured to determine surface parameters of a traffic route; and a control unit (102) that is configured to receive and to process the forecast data from the data transmission device (100) and to control the operation of the spreading device (103) on the basis of the processed forecast data and the determined surface parameters; and;
the server in a wireless data connection with the data transmission device (100) of the device, wherein the server is configured to provide forecast data regarding weather and/or the traffic road conditions;
wherein the control unit (102) is configured to calculate local forecast data regarding local weather and/or the traffic route conditions, which refer to the respective location of the spreading vehicle (1), on the basis of the of the forecast data received by the server from the data transmission device (100) and to control the spreading device (103) based on the calculated local forecast data.

9. Control method for operation of a spreading device (103) of a spreading vehicle (1) for winter road maintenance with the steps:
receiving of forecast data regarding weather and/or traffic route conditions that are provided by the server, in particular over the Internet and in particular through a data transmission device (100) that is provided in the spreading vehicle (1);
determining of surface parameters of a traffic route by a device (101) for determining the traffic route conditions that is installed in or on the spreading vehicle (1); and
controlling of the spreading device (103) on the basis of the forecast data and the determined surface parameters;
with calculation of local forecast data regarding weather and/or the traffic route conditions by the control unit (102) installed in the spreading vehicle (1) on the basis of forecast data regarding weather and/or the traffic route conditions provided by the server and the determined surface parameters of the traffic route.

10. Method according to Claim 9, further with submission of data regarding the determined surface parameters to the server by the data transmission device (100) and receiving the data regarding the determined surface parameters and identifying the forecast data on the basis of such data by the server.

11. Method according to one of Claims 9 or 10 in which determining the surface parameters of the traffic route comprises the steps:
emitting light of predetermined wavelengths, in particular in the infrared range, onto a traffic route;
detecting the light that has been emitted and reflected by the traffic route; and
determining the surface parameters on the basis of the detected light, in particular at least 100 times per second or at least 400 or 500 times per second.

12. Computer program product comprising one or more computer-readable storage media that have computer-readable instructions, which, when read by a computer, prompt this computer to perform the steps of the method according to one of claims 9-11.

## Revendications

1. Dispositif pour commander le fonctionnement d'un dispositif d'épandage (103) d'un véhicule d'épandage également dit véhicule de salage (1) pour le service hivernal, comprenant
un système de transmission de données (100), qui est prévu dans le véhicule d'épandage (1) et est réalisé pour l'établissement d'une liaison de données sans fil, et qui est réalisé pour la réception de données prévisionnelles concernant des conditions météorologiques et/ou de voies de circulation, à partir d'un serveur, par l'intermédiaire d'Internet ;
un système (101) pour déterminer des conditions de voies de circulation, qui est placé sur le véhicule d'épandage (1) et est configuré pour déterminer des paramètres de surface d'une voie de circulation ; et
une unité de commande (102), qui est installée dans le véhicule d'épandage (1) et qui est configurée pour assurer la réception des données prévisionnelles du système de transmission de données (100) et les traiter, ainsi que pour commander le fonctionnement du dispositif d'épandage (103) sur la base des données prévisionnelles traitées et des paramètres de surface ;
dispositif dans lequel l'unité de commande (102) est configurée pour, sur la base des données prévisionnelles réceptionnées par le système de transmission de données (100) à partir du serveur, calculer des données prévisionnelles locales se référant au point de localisation actuel du véhicule d'épandage (1) et concernant des conditions locales météorologiques et/ou de voies de circulation, et pour commander le dispositif d'épandage (103) sur la base des données prévisionnelles locales calculées.

2. Dispositif selon la revendication 1, dans lequel le système de transmission de données (100) est configuré pour émettre vers le serveur, des données concernant les paramètres de surface ayant été déterminés, et dans lequel les données prévisionnelles reçues par le système de transmission de données (100) en provenance du serveur, sont obtenues sur la base des données concernant les paramètres de surface ayant été déterminés, qui ont été transmises par le système de transmission de données (100) au serveur.

3. Dispositif selon l'une des revendications précédentes, dans lequel les données prévisionnelles reçues par le système de transmission de données (100) en provenance du serveur, sont obtenues sur la base de modèles météorologiques relatifs à un maillage de lieux régulièrement répartis et/ou de données de stations météorologiques et/ou d'installations d'alerte de verglas.

4. Dispositif selon la revendication 3, dans lequel les données prévisionnelles sont calculées pour des positions de référence le long d'un trajet prédéterminé prescrit du véhicule d'épandage (1).

5. Dispositif selon l'une des revendications précédentes, dans lequel les paramètres de surface comprennent un ou plusieurs paramètres concernant la température de surface, l'humidité, l'épaisseur de verglas ou de glace, l'épaisseur de neige, l'épaisseur d'un film d'eau, la proportion de la glace par rapport à l'eau, la température de congélation d'un mélange glace-eau, la teneur en sel d'un mélange glace-eau et le coefficient d'adhérence.

6. Dispositif selon l'une des revendications précédentes, comprenant par ailleurs un système de détermination de la température de l'air et/ou de la température de surface d'une voie de circulation et/ou du point de rosée sur la voie de circulation, ledit système étant placé dans ou sur le véhicule d'épandage (1), et l'unité de commande assurant la commande du dispositif d'épandage (103) sur la base de la température d'air et/ou de la température de surface d'une voie de circulation et/ou du point de rosée sur la voie de circulation, ayant été déterminés.

7. Dispositif selon l'une des revendications précédentes, dans lequel le système (101) pour déterminer des conditions de voies de circulation comprend :
un dispositif d'émission de lumière (13), qui est conçu pour émettre de la lumière de longueurs d'onde prédéterminées sur une voie de circulation ;
un dispositif de détection (17), qui est conçu pour détecter la lumière ayant été émise par le dispositif d'émission de lumière (13) et ayant été réfléchie par la voie de circulation ; et
un système de traitement de données, qui est conçu pour, sur la base de la lumière détectée par le dispositif de détection (17), déterminer les paramètres de surface de la voie de circulation, notamment au moins 100 fois par seconde ou bien au moins 400 fois par seconde.

8. Système pour assurer un épandage ou salage sur des voies de circulation, comprenant
un véhicule d'épandage (1) pour le service hivernal ;
un dispositif selon l'une des revendications précédentes ; et
un serveur relié sans fil pour la transmission de données, au système de transmission de données (100) du dispositif, le serveur étant conçu pour fournir des données prévisionnelles concernant des conditions météorologiques et/ou de voies de circulation.

9. Procédé de commande pour assurer le fonctionnement d'un dispositif d'épandage (103) d'un véhicule d'épandage (1) pour le service hivernal, comprenant les étapes suivantes :
la réception de données prévisionnelles concernant des conditions météorologiques et/ou de voies de circulation, qui sont fournies par un serveur, par l'intermédiaire d'Internet et à l'aide d'un système de transmission de données (100), qui est prévu dans le véhicule d'épandage (1) ;
la détermination de paramètres de surface d'une voie de circulation par un système (101) pour déterminer des conditions de voies de circulation, qui est placé dans ou sur le véhicule d'épandage (1) ; et
la commande du dispositif d'épandage (103) sur la base des données prévisionnelles et de paramètres de surface ayant été déterminés ;
procédé d'après lequel la commande du dispositif d'épandage (103) comprend :
le calcul de données prévisionnelles locales concernant des conditions météorologiques et/ou de voies de circulation, par une unité de commande installée dans le véhicule d'épandage (1), sur la base des données prévisionnelles concernant les conditions météorologiques et/ou de voies de circulation fournies par le serveur, et des paramètres de surface de la voie de circulation ayant été déterminés.

10. Procédé selon la revendication 9, comprenant par ailleurs l'émission de données concernant les paramètres de surface ayant été déterminés, à partir du système de transmission de données (100) vers le serveur, et la réception des données concernant les paramètres de surface ayant été déterminés, et la détermination des données prévisionnelles sur la base de ces données, par le serveur.

11. Procédé selon l'une des revendications 9 à 10, d'après lequel la détermination des paramètres de surface de la voie de circulation comprend les étapes suivantes :
l'émission de lumière de longueurs d'onde prédéterminées, dans la plage des infrarouges, sur une voie de circulation ;
la détection de la lumière ayant été émise et réfléchie par la voie de circulation ; et
la détermination des paramètres de surface sur la base de la lumière détectée, notamment au moins 100 fois par seconde ou bien au moins 400 ou 500 fois par seconde.

12. Produit de programme d'ordinateur comprenant un ou plusieurs supports présentant des instructions lisibles par ordinateur, qui, lorsqu'elles sont lues par un ordinateur, amènent celui-ci à exécuter les étapes du procédé selon l'une des revendications 9 à 11.
